# EUROPEAN PATENT APPLICATION

(11) **EP 4 834 610 A1**
(43) Date of publication of application: **04.11.2026**
(21) Application number: 24912166.6
(22) Date of filing: 27.11.2024
(51) Int. Cl.: B60K 1/00, B60K 17/06, B60K 17/12, B62D 21/00, B62D 49/00, E02F 9/00

(54) **ELECTRIC TRACTOR**

(30) Priority: 27.12.2023 JP 2023221672
(71) Applicant: Kubota Corporation, Osaka-shi, Osaka 530-0011 (JP)
(72) Inventor: INABA Daisuke, Sakai-shi, Osaka 590-0908 (JP); SAKUMA Tetsushi, Sakai-shi, Osaka 590-0908 (JP); IIZUKA Hiroaki, Sakai-shi, Osaka 590-0908 (JP); IMOTO Masahiro, Sakai-shi, Osaka 590-0908 (JP); TAKASE Shunya, Sakai-shi, Osaka 590-0908 (JP)
(74) Representative: Müller-Boré & Partner Patentanwälte PartG mbB
(86) International application number: PCT/JP2024/041915
(87) International publication number: WO 2025/142275

(57) **Abstract**

An electric tractor includes an operation section having a floor at a lower portion thereof. The electric tractor includes: electric motors 11 and 12 provided below the floor and configured to generate power for traveling, or power and hydraulic pressure for actuating a working apparatus 65 mounted on the electric tractor; and a housing frame 5 provided below the floor and accommodating the electric motors 11 and 12. Right and left mounting portions 23 for mounting a base portion 66 of the working apparatus 65 are provided at a right portion and a left portion of the housing frame 5.

## Description

### Technical Field

The present invention relates to an overall configuration of an electric tractor.

### Background Art

Some tractors are provided with an engine as a power source as disclosed in Patent Document 1.

In Patent Document 1, an operation section on which an operator rides is provided on a machine body provided with front wheels and rear wheels. The engine is provided forward of the operation section, a front axle case to which the front wheels are mounted is provided below the engine, and a transmission case to which the rear wheels are mounted is provided below the operation section.

As disclosed in Patent Document 2, a tractor may be equipped with a front loader apparatus, which is an example of a working apparatus. In a working apparatus such as the front loader apparatus, a base portion of the working apparatus may be connected to a frame located below the floor of the operation section.

### Prior Art Documents

### Patent Documents

Patent Document 1: JP 2011-88523A
Patent Document 2: JP 2011-80213A

### Summary of the Invention

### Problem to be Solved by the Invention

Electric tractors have been proposed that are equipped with an electric motor generating power for traveling, or an electric motor generating power and hydraulic pressure for actuating a working apparatus mounted on the electric tractor.

An object of the present invention is to provide an electric tractor configured in such a manner that a working apparatus can be mounted without difficulty.

### Means for Solving Problem

An electric tractor according to the present invention includes: an operation section having a floor at a lower portion thereof; at least one electric motor provided below the floor and configured to generate power for traveling, or power and hydraulic pressure for actuating a working apparatus mounted on the electric tractor; and a housing frame provided below the floor and accommodating the electric motor, wherein right and left mounting portions for mounting a base portion of the working apparatus are provided at a right portion and a left portion of the housing frame.

According to the present invention, since the electric motor, which is a heavy object, is arranged at a low position below the floor of the operation section and close to the center in the front-rear direction of the electric tractor, the center of gravity of the electric tractor can be lowered, a favorable weight balance for the electric tractor is obtained, and the traveling performance of the electric tractor is improved.

According to the present invention, the housing frame accommodating the electric motor is provided below the floor of the operation section. Since the housing frame accommodates the electric motor, which is a heavy object, the housing frame is configured to have sufficient strength.

According to the present invention, right and left mounting portions for mounting the base portion of the working apparatus are provided at a right portion and a left portion of the housing frame.

Accordingly, the mounting portions are provided at appropriate positions in the electric tractor, and by mounting the base portion of the working apparatus to the mounting portions, the working apparatus is mounted on the electric tractor with sufficient strength, whereby the working apparatus is mounted on the electric tractor without difficulty.

Since the housing frame has a function of accommodating the electric motor and a function of supporting the working apparatus mounted to the mounting portions, the structure can be simplified through the integration of functions.

In the present invention, it is preferable that an inverter configured to actuate the electric motor is mounted to the housing frame.

According to the present invention, the inverter configured to actuate the electric motor is mounted to the housing frame, and the housing frame also serves as a mounting member for the inverter, and therefore, it is advantageous in terms of simplifying the structure through the integration of functions.

In the present invention, it is preferable that the inverter is mounted to at least one of a right portion and a left portion of the housing frame, and is provided rearward of the mounting portions.

According to the present invention, in a case where the inverter is mounted to the housing frame, the inverter is mounted to a right portion (a left portion) of the housing frame, and is provided rearward of the mounting portions of the housing frame.

When pebbles or the like on the ground are thrown rearward as the electric tractor travels forward, the inverter is protected from the pebbles by the mounting portions, and therefore damage to the inverter can be prevented.

In the present invention, it is preferable that the at least one electric motor includes a first electric motor and a second electric motor, and the first electric motor and the second electric motor are arranged side by side along the left-right direction and accommodated in the housing frame.

According to the present invention, when the first electric motor and the second electric motor are provided, the first electric motor and the second electric motor are arranged side by side along the left-right direction, and therefore the first electric motor and the second electric motor are provided at substantially the same position in the front-rear direction, and are provided at substantially the same height in the up-down direction. Accordingly, a preferable weight balance is obtained in the electric tractor, which is advantageous in terms of improving traveling performance of the electric tractor.

According to the present invention, since the first electric motor and the second electric motor are arranged side by side along the left-right direction and accommodated in the housing frame, the length of the housing frame in the front-rear direction is reduced. In contrast, the width of the housing frame in the left-right direction is increased.

According to the present invention, since the right and left mounting portions are mounted to a right portion and a left portion of the housing frame, the width (interval) between the right and left mounting portions in the left-right direction is large, and the right and left mounting portions are provided at positions spaced laterally outward to the right and left from the center of the electric tractor in the left-right direction.

Accordingly, even if the working apparatus is large, the base portion of the working apparatus is mounted to the mounting portions without difficulty, and the large working apparatus is stably mounted on the electric tractor.

In the present invention, it is preferable that the electric tractor further includes: a transmission case having right and left rear traveling devices mounted thereto, and having a transmission mechanism provided therein to receive power transmitted from the electric motor, wherein the transmission case is connected to a rear portion of the housing frame.

Since the transmission case has the rear traveling devices mounted thereto, the transmission case is configured to have sufficient strength.

According to the present invention, the transmission case is connected to a rear portion of the housing frame, and the housing frame having sufficient strength and the transmission case having sufficient strength are connected to each other, thereby improving the overall rigidity of the electric tractor.

In the present invention, it is preferable that a width of the housing frame in the left-right direction is larger than a width of the transmission case in the left-right direction.

According to the present invention, since the transmission case having the rear traveling devices mounted thereto is connected to the rear portion of the housing frame having a large width in the left-right direction and extends rearward, the housing frame can be provided without difficulty forward of the rear traveling devices in a side view without interfering with the rear traveling devices.

In the present invention, it is preferable that the electric tractor further includes: a right front-rear frame connected across the right mounting portion and a portion of the transmission case to which the right traveling device is mounted, along the front-rear direction; and a left front-rear frame connected across the left mounting portion and a portion of the transmission case to which the left traveling device is mounted, along the front-rear direction.

According to the present invention, since the right and left front-rear frames are connected across the mounting portions and the portions of the transmission case to which the rear traveling devices are mounted, the strength of the mounting portions is improved, and the connection strength between the housing frame and the transmission case is improved.

In the present invention, it is preferable that the right front-rear frame is provided laterally outward to the right of the transmission case, and the left front-rear frame is provided laterally outward to the left of the transmission case.

According to the present invention, since the right (left) front-rear frame is provided laterally outward to the right (left) of the transmission case, the right (left) front-rear frame is provided substantially at the same height as the housing frame and the transmission case, and therefore the front-rear frames are unlikely to protrude significantly upward from the housing frame and the transmission case and are unlikely to protrude significantly downward therefrom in a side view.

Accordingly, the front-rear frames do not interfere with the minimum ground clearance of the electric tractor and do not unnecessarily raise the height of the floor of the operation section.

In the present invention, it is preferable that a width of the housing frame in the left-right direction is larger than a width of the transmission case in the left-right direction, and a width between front portions of the right and left front-rear frames in the left-right direction is larger than a width between rear portions of the right and left front-rear frames in the left-right direction.

According to the present invention, since the transmission case having the rear traveling devices mounted thereto is connected to the rear portion of the housing frame having a large width in the left-right direction and extends rearward, the housing frame can be provided without difficulty forward of the rear traveling devices in a side view without interfering with the rear traveling devices.

According to the present invention, the width (interval) between the front portions of the right and left front-rear frames in the left-right direction is larger than the width (interval) between the rear portions of the right and left front-rear frames in the left-right direction, and the front-rear frames extend along the housing frame and the transmission case in a plan view, and therefore the front-rear frames do not interfere with the rear traveling devices.

In the present invention, it is preferable that the base portion of the working apparatus is sandwiched between the mounting portions and the front-rear frames, and the mounting portions, the front-rear frames, and the base portion of the working apparatus are connected.

According to the present invention, since the base portion of the working apparatus is mounted to the front-rear frames in addition to being mounted to the mounting portions, it is advantageous in that the working apparatus can be mounted to the electric tractor with sufficient strength.

In the present invention, it is preferable that right and left rear mounting portions for mounting the base portion of the working apparatus are provided at rear portions of the right and left front-rear frames.

In the electric tractor, a working apparatus such as a backhoe apparatus may be mounted on a rear portion of the electric tractor.

According to the present invention, the right and left rear mounting portions are provided at rear portions of the front-rear frames, and therefore, by mounting the working apparatus to the rear mounting portions, the working apparatus is mounted on the rear portion of the electric tractor with sufficient strength.

In the present invention, it is preferable that an inverter configured to actuate the electric motor is mounted to at least one of a right portion and a left portion of the housing frame, and is provided rearward of the mounting portions, and the front-rear frames are provided laterally outward of the inverter.

According to the present invention, the inverter configured to actuate the electric motor is mounted to the housing frame, and the housing frame also serves as a mounting member for the inverter, and therefore, it is advantageous in terms of simplifying the structure through the integration of functions.

According to the present invention, in a case where the inverter is mounted to the housing frame, the inverter is mounted to a right portion (a left portion) of the housing frame, and is provided rearward of the mounting portions of the housing frame.

When pebbles or the like on the ground are thrown rearward as the electric tractor travels forward, the inverter is protected from the pebbles or the like by the mounting portions, and therefore damage to the inverter can be prevented.

According to the present invention, the front-rear frames are provided laterally outward of the inverter, and the inverter is protected from an obstacle present laterally outward of the electric tractor by the front-rear frames, whereby damage to the inverter can be prevented.

In the present invention, it is preferable that a control valve configured to supply and discharge hydraulic oil to and from the working apparatus is mounted to the front-rear frames.

According to the present invention, in a case where the working apparatus actuated through the supply and discharge of hydraulic oil is provided, the control valve configured to supply and discharge hydraulic oil to and from the working apparatus is mounted to the front-rear frames. Accordingly, the front-rear frames also serve as mounting members for the control valve, and therefore, the structure can be simplified through the integration of functions.

### Brief Description of the Drawings

FIG. 1 is a left side view of an electric tractor.
FIG. 2 is a plan view of the electric tractor.
FIG. 3 is a left side view of a vicinity of front frames, a housing frame, and a transmission case.
FIG. 4 is a plan view of the vicinity of the front frames, the housing frame, and the transmission case.
FIG. 5 is a plan view of the housing frame.
FIG. 6 is a bottom view of the housing frame.
FIG. 7 is a front view of the housing frame.
FIG. 8 is a rear view of the housing frame.
FIG. 9 is an exploded perspective view of the housing frame.
FIG. 10 is a left side view showing linkage mechanisms extending across brake pedals and brakes.
FIG. 11 is a rear view of a vicinity of a support frame on which a steering handle or the like is mounted.
FIG. 12 is a plan view showing the linkage mechanisms extending across the brake pedals and the brakes.
FIG. 13 is a longitudinal sectional front view showing the linkage mechanisms extending across the brake pedals and the brakes.
FIG. 14 is a left side view of the electric tractor equipped with a front loader apparatus.
FIG. 15 is a plan view of the vicinity of the front frames, the housing frame, and the transmission case with the front loader apparatus equipped.
FIG. 16 is a left side view of the electric tractor equipped with the front loader apparatus and a backhoe apparatus.
FIG. 17 is a plan view of the vicinity of the front frames, the housing frame, and the transmission case with the front loader apparatus and the backhoe apparatus equipped.

### Description of Embodiments

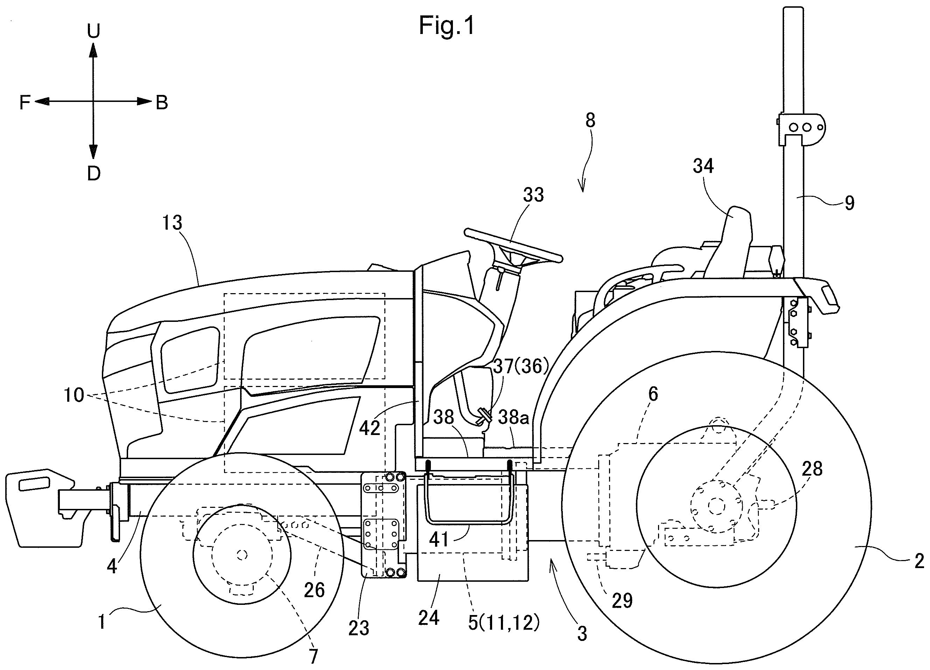

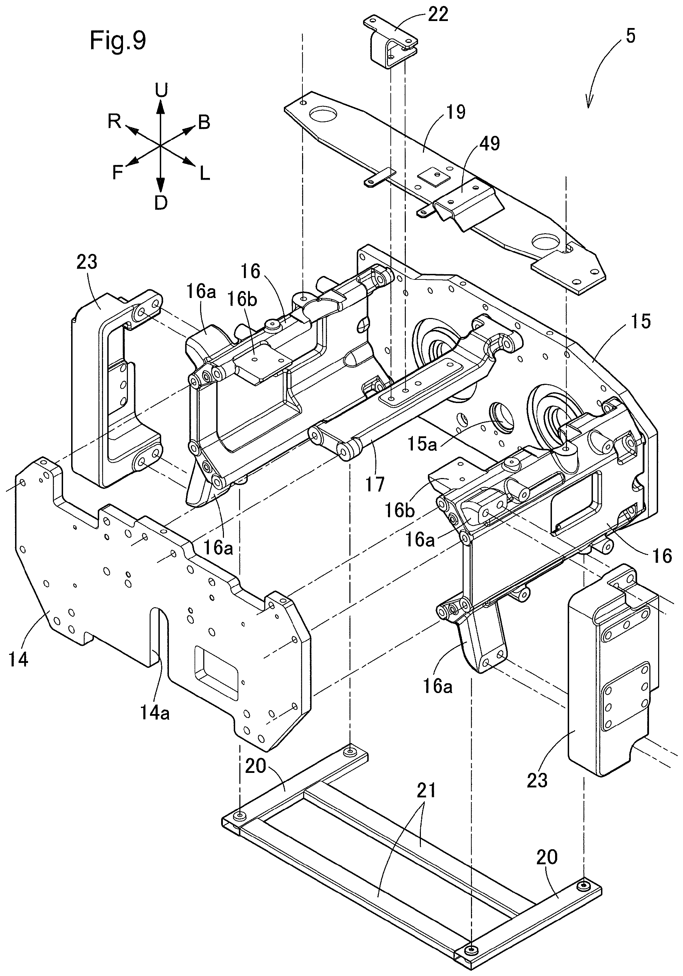

FIGS. 1 to 17 show an electric tractor. In FIGS. 1 to 17, F indicates a forward direction, B indicates a rearward direction, U indicates an upward direction, D indicates a downward direction, R indicates a right direction, and L indicates a left direction.

### Overall Configuration of Electric Tractor

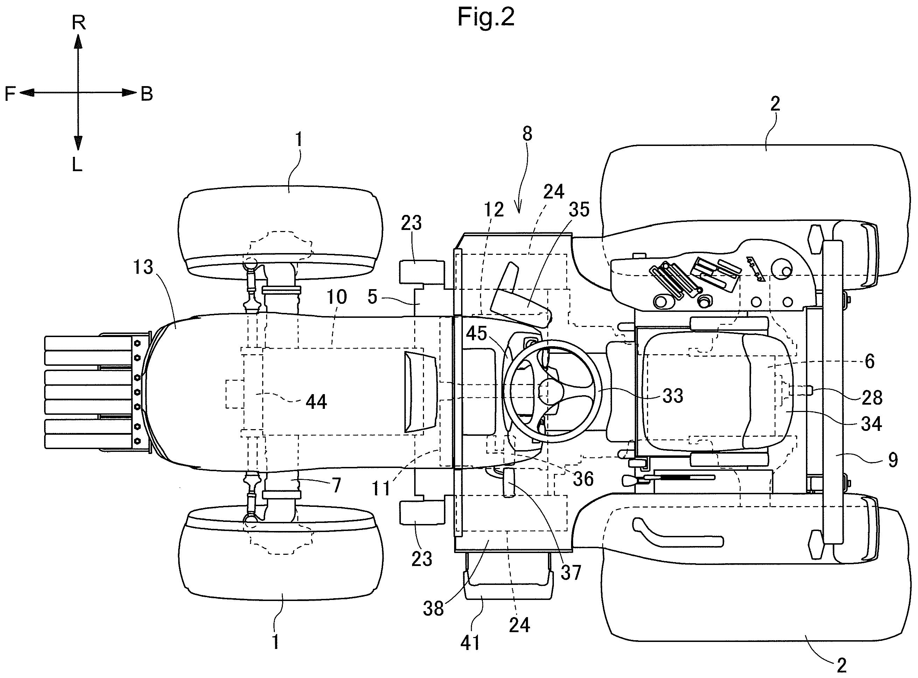

As shown in FIGS. 1 and 2, right and left front wheels 1 are provided at a front portion of a machine body 3, right and left rear wheels 2 are provided at a rear portion of the machine body 3, and the machine body 3 is supported by the front wheels 1 and the rear wheels 2. In this case, the rear wheels 2 serve as rear traveling devices.

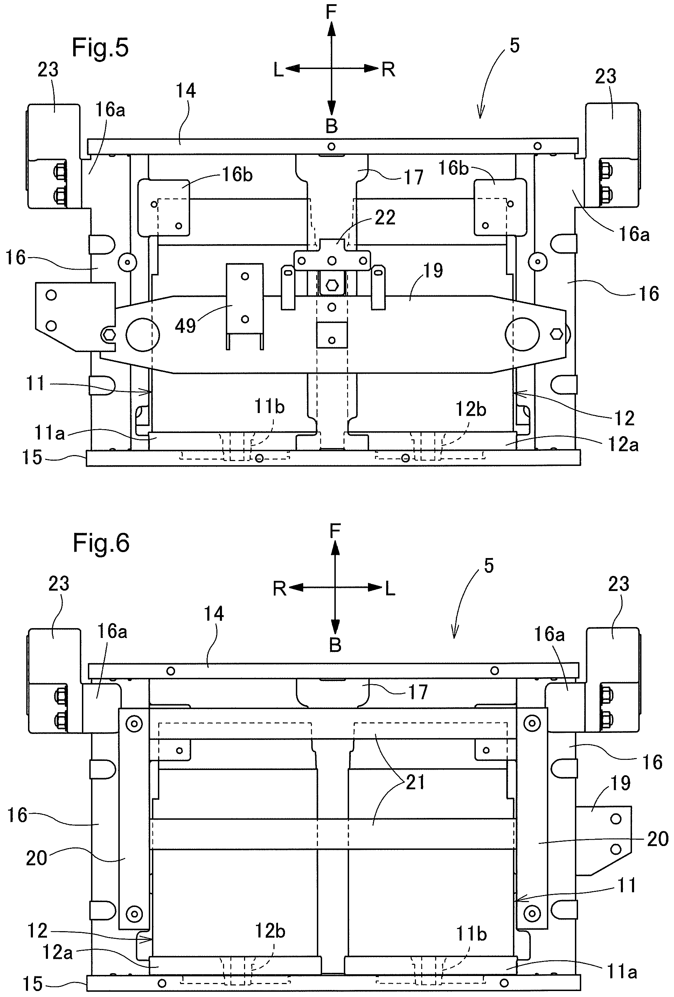

The machine body 3 includes front frames 4, a housing frame 5, and a transmission case 6. The front frames 4 are connected to a front portion 14 (see FIGS. 5 to 9) of the housing frame 5, and the transmission case 6 is connected to a rear portion 15 (see FIGS. 5 to 9) of the housing frame 5, whereby the machine body 3 is formed. A first electric motor 11 and a second electric motor 12 serving as power sources are accommodated in the housing frame 5. In this case, the front frames 4 serve as first front frames.

A front axle case 7 is mounted on the front frames 4, and the right and left front wheels 1 are mounted on the front axle case 7. The right and left rear wheels 2 are mounted on the transmission case 6.

An operation section 8 on which an operator rides is provided across the housing frame 5 and the transmission case 6. AROPS frame 9 is mounted on the transmission case 6 and extends upward, and is provided rearward of the operation section 8. A battery 10 for supplying electric power to the electric motors 11 and 12 is mounted on the front frames 4, and a hood 13 covering the battery 10 is provided.

### Configuration of Housing Frame

As shown in FIGS. 5 to 9, the housing frame 5 includes a front portion 14, a rear portion 15, a right side portion 16, a left side portion 16, frames 17, 19, 20, and 21, and the like. In this case, the right side portion 16 and the left side portion 16 of the housing frame 5 serve as a right portion and a left portion of the housing frame 5.

The front portion 14 and the rear portion 15 are each formed in a flat-plate shape extending along the up-down direction and the left-right direction. The right and left side portions 16 are each formed in a slightly curved flat-plate shape extending along the up-down direction and the front-rear direction. Front portions of the side portions 16 are connected to right and left portions of a rear surface portion of the front portion 14, and rear portions of the side portions 16 are connected to right and left portions of a front surface portion of the rear portion 15.

The frame 17 is connected across a center portion in the left-right direction of an upper portion of the rear surface portion of the front portion 14 and a center portion in the left-right direction of an upper portion of the front surface portion of the rear portion 15 along the front-rear direction. The frame 19 is connected across upper portions of the right and left side portions 16 along the left-right direction. A bracket 22 is connected across the frame 17 and the frame 19. In this case, the frame 17 serves as an upper frame of the housing frame 5.

The right and left frames 20 are connected to lower portions of the right and left side portions 16 along the front-rear direction. The frame 21 is connected across the right and left frames 20 along the left-right direction. A recess 14a opening downward and facing upward is provided in a center portion in the left-right direction of the lower portion of the front portion 14. An opening 15a is formed in a center portion in the left-right direction of the rear portion 15. In this case, the frame 21 serves as a lower frame of the housing frame 5.

### Configuration for Accommodating Electric Motors in Housing Frame

As shown in FIGS. 5 to 8, the electric motors 11 and 12 are provided side by side along the left-right direction inside the housing frame 5 (between the front portion 14 and the rear portion 15, between the right and left side portions 16, and between the frames 17 and 19 and the frame 21). The electric motors 11 and 12 are identical and have the same output.

A flange portion 11a of the rear end portion of the electric motor 11 is connected to a left portion of the front surface portion of the rear portion 15 of the housing frame 5. A flange portion 12a of the rear end portion of the electric motor 12 is connected to a right portion of the front surface portion of the rear portion 15 of the housing frame 5. Output shafts 11b and 12b of the electric motors 11 and 12 are provided at the positions of the flange portions 11a and 12a of the electric motors 11 and 12 toward the rear along the front-rear direction.

Inside the housing frame 5, the electric motor 11 is provided on the left side with respect to the recess 14a of the front portion 14 and the opening 15a of the rear portion 15 of the housing frame 5. The electric motor 12 is provided on the right side with respect to the recess 14a of the front portion 14 and the opening 15a of the rear portion 15 of the housing frame 5.

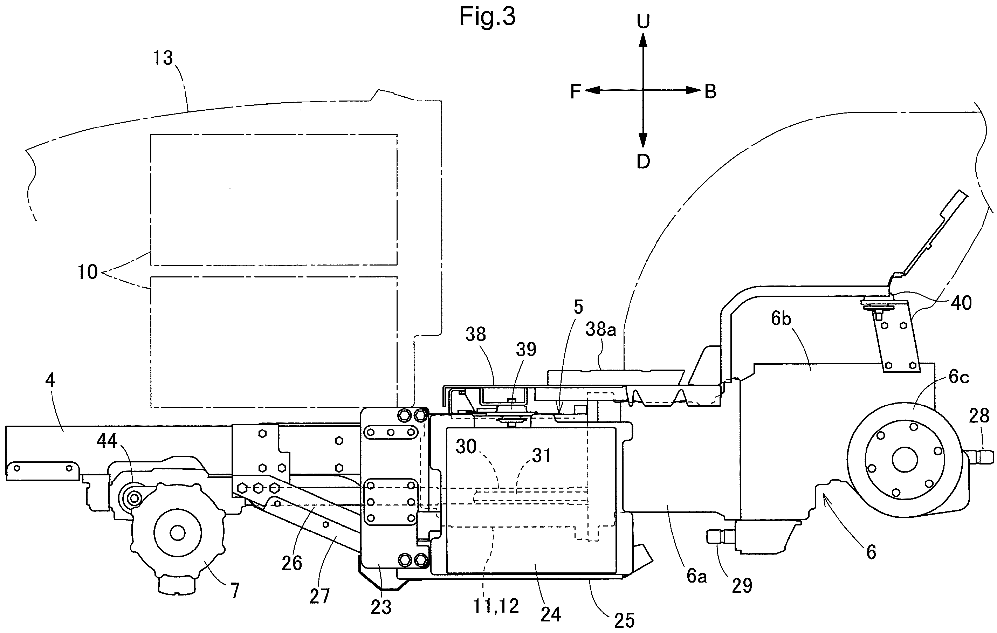

As shown in FIG. 3, a flat plate-shaped cover 25 is mounted across the lower portions of the right and left side portions 16, which are the bottom of the housing frame 5, and is mounted across the lower portions of the front portion 14 and the rear portion 15 of the housing frame 5. In this case, the cover 25 serves as an electric motor protection member.

### Configuration of Mounting Portions for Mounting Working Apparatus, and Inverters

As shown in FIGS. 5 to 9, in the right and left side portions 16 of the housing frame 5, an upper mounting portion 16a is provided obliquely upward at the upper portion of the front portion of the side portion 16, and a lower mounting portion 16a is provided obliquely downward at the lower portion of the front portion of the side portion 16.

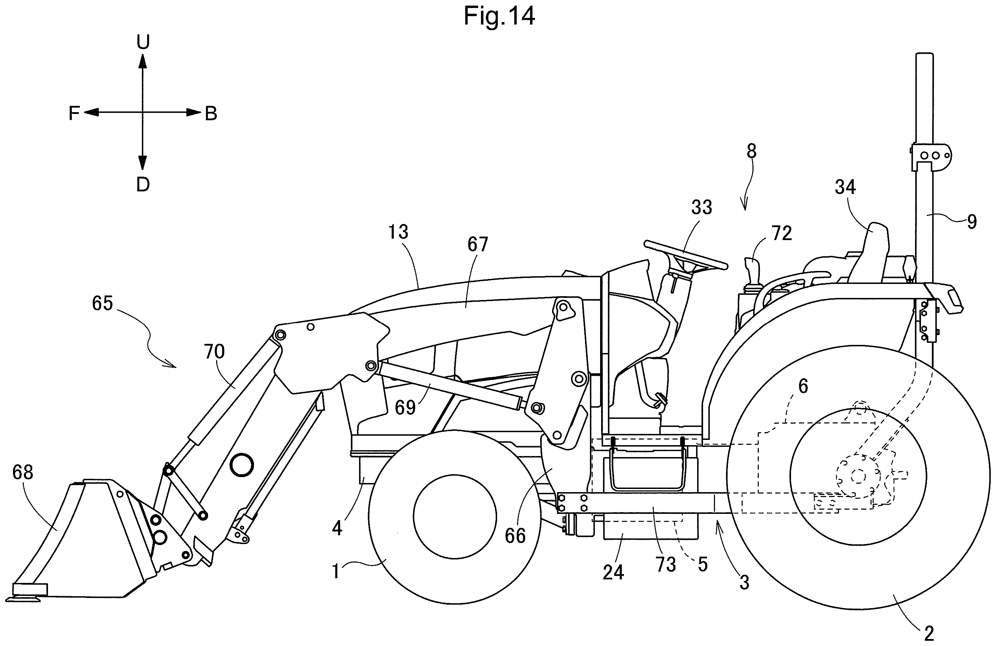

A right mounting portion 23 is connected across the mounting portions 16a of the right side portion 16 of the housing frame 5. A left mounting portion 23 is connected across the mounting portions 16a of the left side portion 16 of the housing frame 5. As will be described later, a working apparatus such as a front loader apparatus 65 (see FIG. 14) is mounted to the right and left mounting portions 23.

As shown in FIGS. 1 to 4, right and left inverters 24 are mounted to the right and left side portions 16 of the housing frame 5, and are provided rearward of the mounting portions 23. As will be described later, a speed change pedal 35 is provided in the operation section 8.

Electric power from the battery 10 is supplied to the left inverter 24, DC power from the battery 10 is converted into AC power by the left inverter 24 based on operation of the speed change pedal 35 and is supplied to the electric motor 11, and the electric motor 11 performs forward rotation operation (forward movement of the electric tractor) and reverse rotation operation (reverse movement of the electric tractor).

Electric power from the battery 10 is supplied to the right inverter 24, DC power from the battery 10 is converted into AC power by the right inverter 24, and is supplied to the electric motor 12, and the electric motor 12 operates. The electric motor 12 drives a hydraulic pump (not shown) as will be described later, and therefore performs forward rotation operation and does not perform reverse rotation operation.

### Configurations of Front Frames and Front Axle Case

As shown in FIGS. 1, 3, and 4, the right and left front frames 4 are provided, and the front frames 4 are connected to an upper portion of a front surface portion of the front portion 14 (see FIGS. 5 to 9) of the housing frame 5 and extend forward.

Right and left front frames 26 are provided. At a lower portion of the front surface portion of the front portion 14 (see FIGS. 5 to 9) of the housing frame 5, rear portions of the front frames 26 are connected to the lower portions of the front frames 4, and front portions of the front frames 26 are connected to intermediate portions in the front-rear direction of the front frames 4. In this case, the front frames 26 serve as second front frames.

The battery 10 is mounted to the upper portions of the front frames 4, and the rear end portion of the battery 10 is provided forward of the front end portions of the electric motors 11 and 12. The front axle case 7 (the front wheels 1) is rollably mounted to the lower portions of the front portions of the front frames 4, is provided below the battery 10, and is provided forward of the electric motors 11 and 12.

A flat plate-shaped cover 27 is mounted across the right and left front frames 26. In a side view, the front frames 26 and the cover 27 are in a forward-upward inclined orientation in which the front portions of the front frames 26 and the cover 27 are higher than the rear portions of the front frames 26 and the cover 27. In this case, the cover 27 serves as a front wheel transmission shaft protection member.

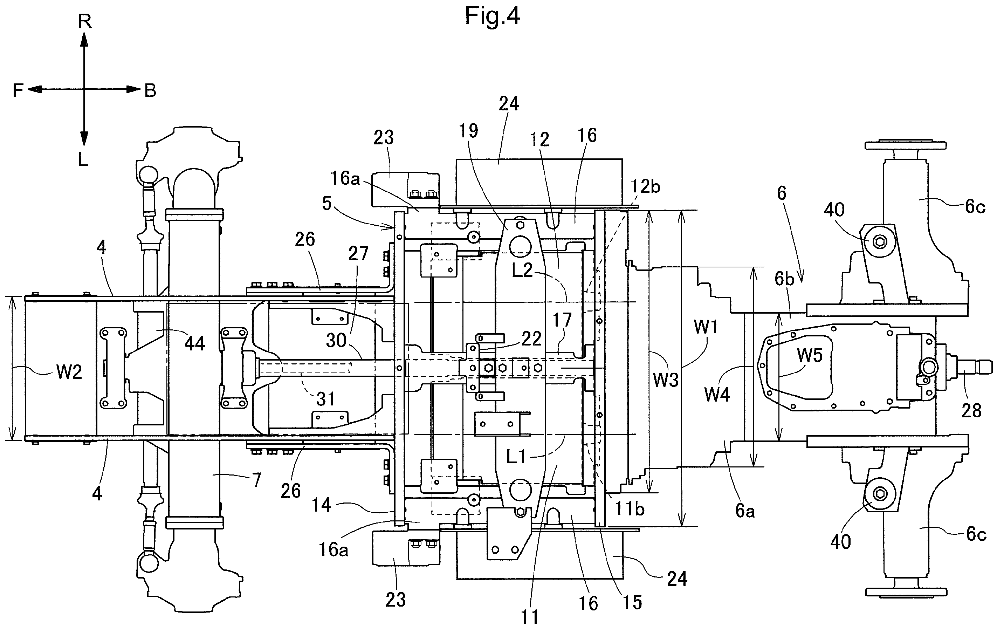

As shown in FIG. 4, the right and left front frames 4 and 26 and the cover 27 have the same width W2 in the left-right direction. The width W1 of the housing frame 5 in the left-right direction is larger than the width W2 between the right and left front frames 4 and 26 and the cover 27 in the left-right direction.

In a plan view, the output shaft 11b of the electric motor 11 is located on an imaginary line L1 extending rearward from the left front frames 4 and 26. The output shaft 12b of the electric motor 12 is located on an imaginary line L2 extending rearward from the right front frames 4 and 26. As a result, the width W2 between the right and left front frames 4 and 26 and the cover 27 in the left-right direction is substantially the same as the width (interval) between the output shafts 11b and 12b of the electric motors 11 and 12 in the left-right direction.

### Configuration of Transmission Case

As shown in FIGS. 3 and 4, the transmission case 6 includes a front portion 6a, a rear portion 6b, and right and left rear axle cases 6c, and the right and left rear wheels 2 are mounted to the rear axle cases 6c of the transmission case 6. The front portion 6a of the transmission case 6 is connected to the rear surface portion of the rear portion 15 of the housing frame 5, and the transmission case 6 is provided rearward of the electric motors 11 and 12.

The width W1 of the housing frame 5 in the left-right direction is larger than the widths W3 and W4 of the front portion 6a of the transmission case 6 in the left-right direction. The widths W3 and W4 of the front portion 6a of the transmission case 6 in the left-right direction are larger than the width W5 of the rear portion 6b of the transmission case 6 in the left-right direction.

A hydraulic multi-plate traveling clutch (not shown), an auxiliary transmission (not shown), and a rear wheel differential device (not shown) are provided inside the transmission case 6. The auxiliary transmission is of a gear-shift type and is shiftable between two speed ranges, namely high and low. Power from the output shaft 11b of the electric motor 11 is transmitted to the traveling clutch, is transmitted from the traveling clutch to the auxiliary transmission, and is transmitted from the auxiliary transmission to the rear wheels 2 via the rear wheel differential device. In this case, the hydraulic multi-plate traveling clutch, the auxiliary transmission, and the rear wheel differential device serve as a transmission mechanism.

Inside the transmission case 6, power branched off between the auxiliary transmission and the rear wheel differential device is transmitted to a front wheel transmission shaft 31 described later, is transmitted from the front wheel transmission shaft 31 to a front wheel differential device (not shown) inside the front axle case 7, and is transmitted from the front wheel differential device to the front wheels 1.

A PTO shaft 28 is provided on the rear portion 6b of the transmission case 6 in such a manner as to extend rearward, and a mid-PTO shaft 29 is provided on the bottom portion of the rear portion 6b of the transmission case 6 in such a manner as to extend forward. A hydraulic multi-plate PTO clutch (not shown) and a PTO transmission system (not shown) are provided inside the transmission case 6. Power from the output shaft 12b of the electric motor 12 is transmitted to the PTO clutch, is transmitted from the PTO clutch to the PTO transmission system, and is transmitted from the PTO transmission system to the PTO shaft 28 and the mid-PTO shaft 29. In this case, the PTO clutch and the PTO transmission system serve as a transmission mechanism.

In the electric tractor, when a working apparatus such as a rotary tiller (not shown) is mounted to the rear portion of the machine body 3, power from the PTO shaft 28 is transmitted to the working apparatus. When a working apparatus such as a mower (not shown) is mounted to the lower portion of the machine body 3 between the front wheels 1 and the rear wheels 2, power from the mid-PTO shaft 29 is transmitted to the working apparatus.

### Configuration of Front Wheel Transmission Shaft

As shown in FIGS. 3 and 4, a pipe member 30 is connected across the rear portion 15 of the housing frame 5 and the front axle case 7 along the front-rear direction. The aforementioned front wheel transmission shaft 31 is provided inside the pipe member 30 and is connected across the inside of the transmission case 6 and the front wheel differential device of the front axle case 7.

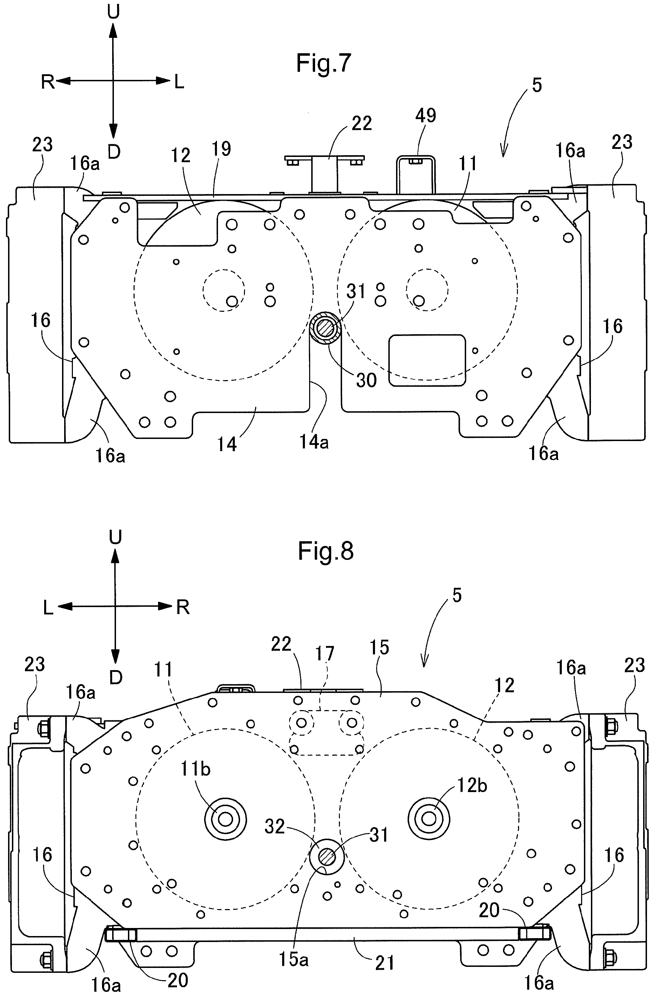

As shown in FIGS. 7, 8, and 9, in the housing frame 5, the pipe member 30 and the front wheel transmission shaft 31 are provided in the recess 14a of the front portion 14 of the housing frame 5, and the front wheel transmission shaft 31 is provided in the opening 15a of the rear portion 15 of the housing frame 5.

A bearing portion 32 is provided in the opening 15a of the rear portion 15 of the housing frame 5. The front wheel transmission shaft 31 is supported by the bearing portion 32, and is supported by the rear portion 15 of the housing frame 5 via the bearing portion 32. The rear end portion of the pipe member 30 is mounted to the bearing portion 32.

As shown in FIGS. 3, 4, 7, and 8, the pipe member 30 and the front wheel transmission shaft 31 are provided between the right and left front frames 4 and 26 and are provided above the cover 27 in a plan view. The pipe member 30 and the front wheel transmission shaft 31 are provided between the output shaft 11b of the electric motor 11 and the output shaft 12b of the electric motor 12 in a plan view, are provided at the center in the left-right direction of the housing frame 5, and are provided directly below the frame 17 of the housing frame 5.

The pipe member 30 and the front wheel transmission shaft 31 overlap the electric motors 11 and 12 in height in a side view. Specifically, the pipe member 30 and the front wheel transmission shaft 31 are provided between the output shafts 11b and 12b of the electric motors 11 and 12 and the lower end portions of the electric motors 11 and 12 in a side view, and are provided above the frame 21 of the housing frame 5.

### Configuration of Operation Section

As shown in FIGS. 1 and 2, the operation section 8 is provided with a steering handle 33 for steering the front wheels 1, an operator's seat 34, the aforementioned speed change pedal 35, right and left brake pedals 36 and 37, a floor 38, and the like.

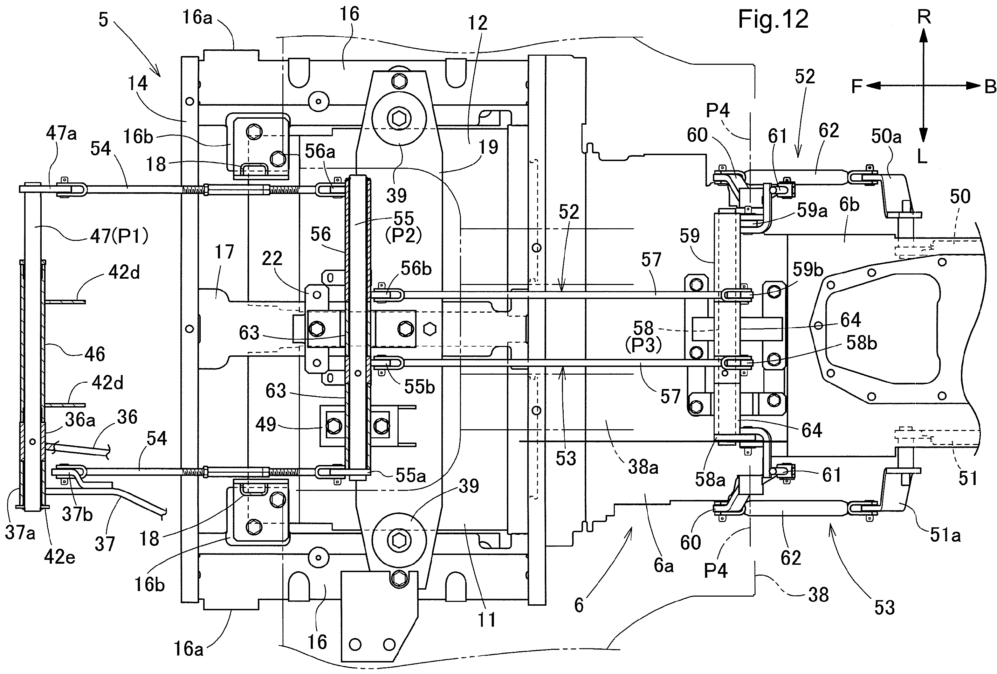

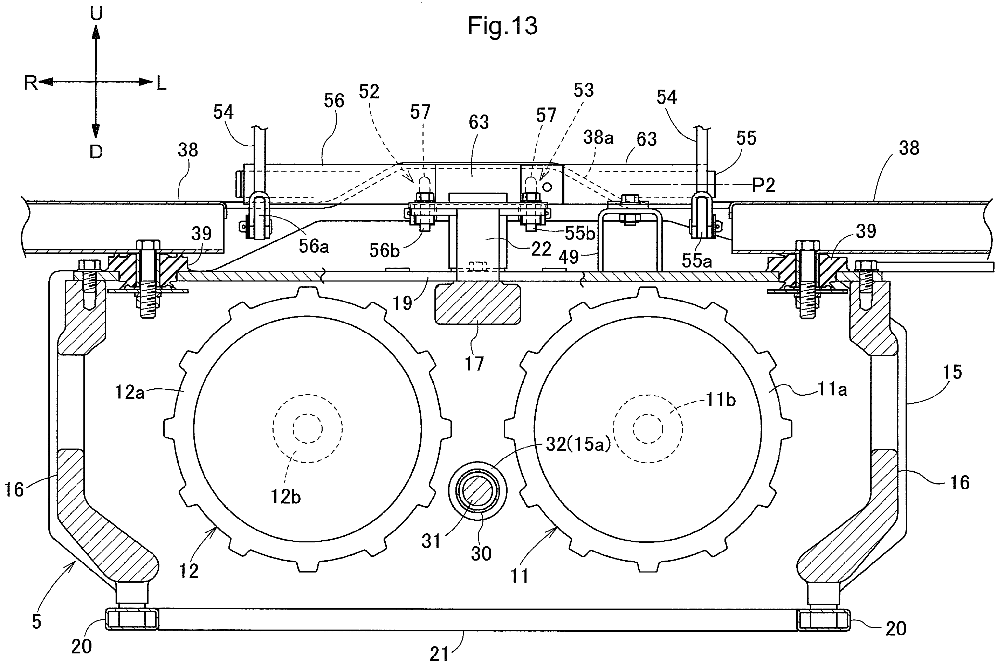

As shown in FIGS. 12 and 13, elastically deformable right and left support portions 39 made of rubber are provided at right and left portions of the frame 19 of the housing frame 5, and the support portions 39 are provided between the floor 38 provided at a lower portion of the operation section 8 and the housing frame 5 (the frame 19).

As shown in FIGS. 3 and 4, elastically deformable right and left support portions 40 made of rubber are provided on right and left portions of the rear portion 6b of the transmission case 6, and the support portions 40 are provided between the rear portion of the operation section 8 and the rear portion 6b of the transmission case 6.

As shown in FIGS. 3, 4, 12, and 13, the floor 38 is mounted to the support portions 39 and is mounted to and supported by the housing frame 5 via the support portions 39, and the speed change pedal 35 is provided on the right portion of the floor 38. The rear portion of the operation section 8 is mounted to the support portions 40 and is mounted to and supported by the rear portion 6b of the transmission case 6 via the support portions 40.

As shown in FIGS. 1 and 2, a step 41 on which a foot is placed is mounted to the left portion of the floor 38, and an operator mainly gets on and off the operation section 8 from the left side with respect to the machine body 3.

The housing frame 5 and the electric motors 11 and 12 are provided below the floor 38. The battery 10 is provided forward of the operation section 8 in such a manner that the rear end portion of the battery 10 is located forward of the front end portions of the electric motors 11 and 12.

### Configuration of Support Frame of Operation Section

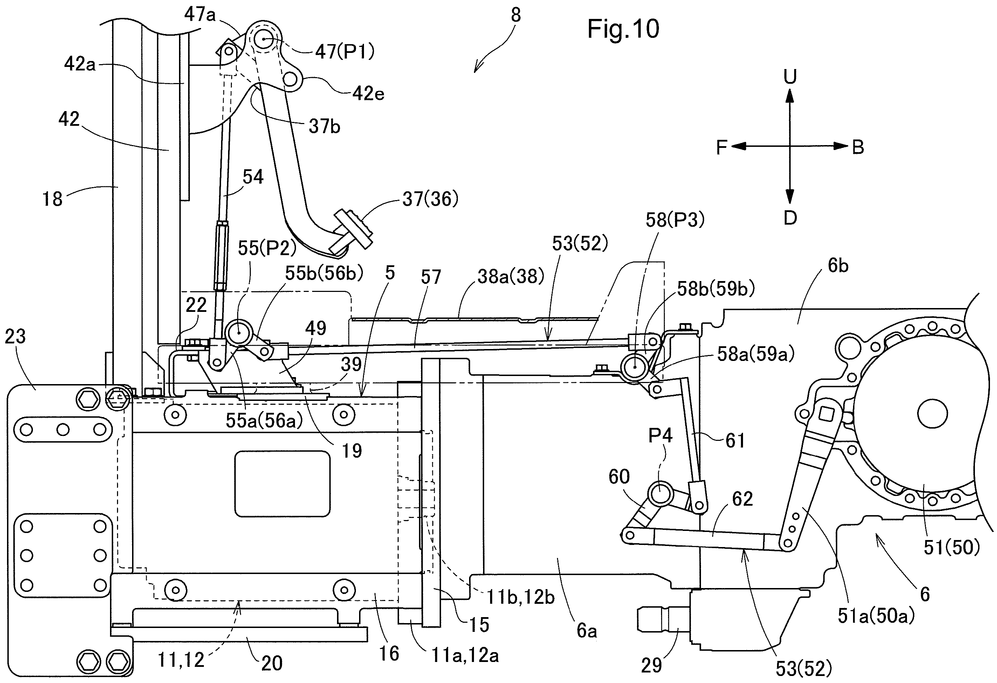

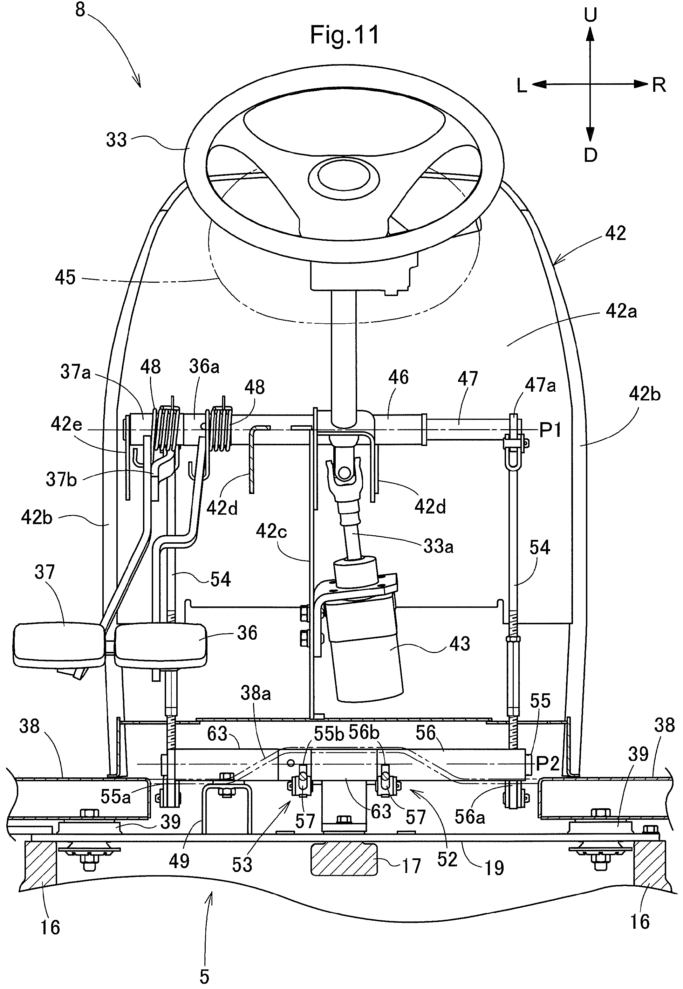

As shown in FIGS. 10 and 11, a support frame 42 is mounted to the floor 38 and extends upward from the floor 38. The support frame 42 includes a partition wall portion 42a, a pillar portion 42b, and support plates 42c and 42d.

In the support frame 42, the partition wall portion 42a is formed in a flat plate shape and is mounted to the front portion of the floor 38, and partitions the inside of the hood 13 and the battery 10 from the operation section 8. The pillar portion 42b is formed in an arch shape in a front view and is connected to the outer peripheral portion of the partition wall portion 42a.

In the support frame 42, the support plate 42c is formed in a vertically elongated flat plate shape, and is connected to the center portion in the left-right direction of the lower portion of the partition wall portion 42a. The support plates 42d are formed in a flat plate shape, are connected to the center portion in the left-right direction of the partition wall portion 42a, and extend rearward from the partition wall portion 42a.

### Configurations relating to Steering Handle, Power Steering Device, and Display Portion in Support Frame

As shown in FIG. 11, the base portion of the steering handle 33 is mounted to the upper portion of the support plate 42c and the support plates 42d of the support frame 42, and the steering handle 33 is mounted to the support frame 42.

A full hydraulic type power steering device 43 is mounted to the lower portion of the support plate 42c of the support frame 42, and the power steering device 43 is mounted to the portion below the steering handle 33 in the support frame 42. A steering shaft 33a extending downward from the base portion of the steering handle 33 is connected to the power steering device 43.

As shown in FIGS. 2, 3, and 4, a steering cylinder 44 is mounted to the front axle case 7, and hydraulic oil from the power steering device 43 is supplied to the steering cylinder 44.

When the steering handle 33 is operated, the power steering device 43 is operated by the steering shaft 33a of the steering handle 33, hydraulic oil is supplied from the power steering device 43 to the steering cylinder 44, and the steering cylinder 44 is actuated to steer the front wheels 1.

As shown in FIGS. 2 and 11, a display portion 45 is mounted to the portion above the support plates 42c and 42d of the support frame 42. The display portion 45 is constituted by a liquid crystal panel, and various types of information are displayed on the display portion 45.

### Configurations relating to Pillar Frame and Hood

As shown in FIGS. 10 and 12, a pillar frame 18 formed in an arch shape in a front view is provided, and the pillar frame 18 is adjacent to the front side of the support frame 42.

As shown in FIGS. 5, 9, and 12, right and left brackets 16b are provided at the front portions of the upper portions of the right and left side portions 16 of the housing frame 5. The right and left lower portions of the pillar frame 18 are connected to the right and left brackets 16b of the housing frame 5 (the side portions 16), and the pillar frame 18 extends upward from the housing frame 5.

In this case, the support portions 39 and 40 are not provided between the lower portion of the pillar frame 18 and the brackets 16b of the housing frame 5 (the side portions 16), and the lower portion of the pillar frame 18 is directly connected to the brackets 16b of the housing frame 5 (the side portions 16).

As shown in FIGS. 1 and 2, the hood 13 is mounted to the upper portion of the pillar frame 18 in such a manner as to be swingable about an axis extending along the left-right direction. The hood 13 is openable and closable between a closed position (see FIG. 1) and an open position above the closed position.

### Configurations relating to Brake Pedals in Support Frame

As shown in FIGS. 10 to 13, a pipe member 46 is connected to the upper portions of the support plates 42d of the support frame 42 along the left-right direction. A pivot shaft 47 is mounted to the pipe member 46 in such a manner as to be rotatable about an axis P1 extending along the left-right direction, and a left portion of the pivot shaft 47 is rotatably supported by a bracket 42e connected to the partition wall portion 42a of the support frame 42.

A boss portion 36a is connected to the upper portion of the right brake pedal 36, the boss portion 36a of the right brake pedal 36 is connected to the left portion of the pivot shaft 47, and the right brake pedal 36 extends downward from the pivot shaft 47. The right brake pedal 36 and the pivot shaft 47 swing integrally about the axis P1.

A boss portion 37a is connected to the upper portion of the left brake pedal 37, the boss portion 37a of the left brake pedal 37 is rotatably mounted to the left portion of the pivot shaft 47, and the left brake pedal 37 extends downward from the pivot shaft 47. The left brake pedal 37 swings about the axis P1 independently of the right brake pedal 36 and the pivot shaft 47.

An operator seated in the operator's seat 34 depresses the right and left brake pedals 36 and 37 forward with the left foot from the position shown in FIG. 10. Return springs 48 are mounted to the boss portions 36a and 37a of the right and left brake pedals 36 and 37. When the operator releases the left foot from the right and left brake pedals 36 and 37, the right and left brake pedals 36 and 37 are returned to the position shown in FIG. 10 by the return springs 48.

### Configuration of Linkage Mechanisms Connected across Brake Pedals and Brakes - 1

As shown in FIGS. 10, 11, and 12, a right brake 50 capable of braking the right rear wheel 2 and a right brake 51 capable of braking the left rear wheel 2 are provided at the rear portion 6b of the transmission case 6. Aright linkage mechanism 52 is connected across the right brake pedal 36 and the right brake 50 as described below. A left linkage mechanism 53 is connected across the left brake pedal 37 and the left brake 51 as described below.

The right linkage mechanism 52 includes a right linkage rod 54, a pipe member 56, a right linkage rod 57, a pipe member 59, a right crank member 60, a right linkage rod 61, and a right linkage rod 62. In this case, the pipe member 59 serves as a left-right portion, the linkage rod 61 serves as an up-down portion, and the linkage rod 62 serves as a front-rear portion.

The left linkage mechanism 53 includes a left linkage rod 54, a linkage shaft 55, a left linkage rod 57, a linkage shaft 58, a left crank member 60, a left linkage rod 61, and a left linkage rod 62. In this case, the linkage shaft 58 serves as a left-right portion, the linkage rod 61 serves as an up-down portion, and the linkage rod 62 serves as a front-rear portion.

A bracket 49 is connected to the frame 19 of the housing frame 5, and two pipe members 63 spaced apart in the left-right direction are connected to the brackets 22 and 49 of the housing frame 5, respectively. The linkage shaft 55 is mounted to the pipe members 63 in such a manner as to be rotatable about an axis P2 extending along the left-right direction. An arm 55a is connected to the left end portion of the linkage shaft 55, and an arm 55b is connected to the center portion in the left-right direction (the portion between the two pipe members 63) of the linkage shaft 55.

The pipe member 56 is mounted to the right portion of the linkage shaft 55 in such a manner as to be rotatable about the axis P2 independently of the linkage shaft 55. An arm 56a is connected to the right end portion of the pipe member 56, and an arm 56b is connected to the left end portion of the pipe member 56.

The right linkage rod 54 is connected across an arm 47a of the pivot shaft 47 and the arm 56a of the pipe member 56. The left linkage rod 54 is connected across an arm 37b of the left brake pedal 37 and the arm 55a of the linkage shaft 55.

### Configuration of Linkage Mechanisms Connected across Brake Pedals and Brakes - 2

As shown in FIGS. 10 to 13, two pipe members 64 spaced apart in the left-right direction are connected to the upper portion of the rear portion 6b of the transmission case 6. The linkage shaft 58 is mounted to the pipe members 64 in such a manner as to be rotatable about an axis P3 extending along the left-right direction. An arm 58a is connected to the left end portion of the linkage shaft 58, and an arm 58b is connected to the center portion in the left-right direction (the portion between the two pipe members 64) of the linkage shaft 58.

The pipe member 59 is mounted to the right portion of the linkage shaft 58 in such a manner as to be rotatable about the axis P3 independently of the linkage shaft 58. An arm 59a is connected to the right end portion of the pipe member 59, and an arm 59b is connected to the left end portion of the pipe member 59.

The right linkage rod 57 is connected across the arm 56b of the pipe member 56 and the arm 59b of the pipe member 59. The left linkage rod 57 is connected across the arm 55b of the linkage shaft 55 and the arm 58b of the linkage shaft 58.

In the floor 38 of the operation section 8, a bulge portion 38a bent in such a manner as to bulge upward relative to the other portions of the floor 38 is formed at the center portion in the left-right direction of the floor 38, and the bulge portion 38a is provided across the front end portion and the rear end portion of the floor 38 along the front-rear direction.

The right and left linkage rods 57 are arranged side by side along the left-right direction between the bulge portion 38a of the floor 38 and the housing frame 5, and are provided along the front-rear direction. The right and left linkage rods 57 each extend to a position above the rear portion 5b of the transmission case 6 (the linkage shaft 58 and the pipe member 59).

### Configuration of Linkage Mechanisms Connected across Brake Pedals and Brakes - 3

As shown in FIGS. 10 and 12, the right portion of the linkage shaft 58 and the pipe member 59 extend laterally outward to the right from the center portion in the left-right direction of the rear portion 6b of the transmission case 6, and extend to a position above the right lateral side portion of the rear portion 6b of the transmission case 6. The left portion of the linkage shaft 58 extends laterally outward to the left from the center portion in the left-right direction of the rear portion 6b of the transmission case 6, and extends to a position above the left lateral side portion of the rear portion 6b of the transmission case 6.

The right and left crank members 60 are mounted to the right and left lateral side portions of the rear portion 6b of the transmission case 6 in such a manner as to be swingable about an axis P4 extending along the left-right direction. The right linkage rod 61 is connected across the arm 59a of the pipe member 59 and the right crank member 60.

The left linkage rod 61 is connected across the arm 58a of the linkage shaft 58 and the left crank member 60.

The right linkage rod 61 is provided rearward of the right portion of the front portion 6a of the transmission case 6 and laterally outward of the right lateral side portion of the rear portion 6b of the transmission case 6, along the up-down direction.

The left linkage rod 61 is provided rearward of the left portion of the front portion 6a of the transmission case 6 and laterally outward of the left lateral side portion of the rear portion 6b of the transmission case 6, along the up-down direction.

The right linkage rod 62 is connected across the right crank member 60 and an operation portion 50a of the right brake 50 along the front-rear direction. The left linkage rod 62 is connected across the left crank member 60 and an operation portion 51a of the left brake 51 along the front-rear direction.

### Operation States of Brakes Operated by Brake Pedals

As shown in FIGS. 10 to 13, in response to the right brake pedal 36 being depressed forward, the pivot shaft 47 is operated clockwise in FIG. 10, the right linkage rod 54 is operated upward, and the pipe member 56 is operated clockwise in FIG. 10.

In response to the pipe member 56 being operated clockwise in FIG. 10, the right linkage rod 57 is operated forward, the pipe member 59 is operated counterclockwise in FIG. 10, the right linkage rod 61 is operated upward, the right crank member 60 is operated counterclockwise in FIG. 10, the right linkage rod 62 is operated rearward, and the operation portion 50a of the right brake 50 is operated rearward, whereby the right brake 50 is operated for braking.

In response to the left brake pedal 37 being depressed forward, the left linkage rod 54 is operated upward, and the linkage shaft 55 is operated clockwise in FIG. 10.

In response to the linkage shaft 55 being operated clockwise in FIG. 10, the left linkage rod 57 is operated forward, the linkage shaft 58 is operated counterclockwise in FIG. 10, the left linkage rod 61 is operated upward, the left crank member 60 is operated counterclockwise in FIG. 10, the left linkage rod 62 is operated rearward, and the operation portion 51a of the left brake 51 is operated rearward, whereby the left brake 51 is operated for braking.

### Configuration of Front Loader Apparatus

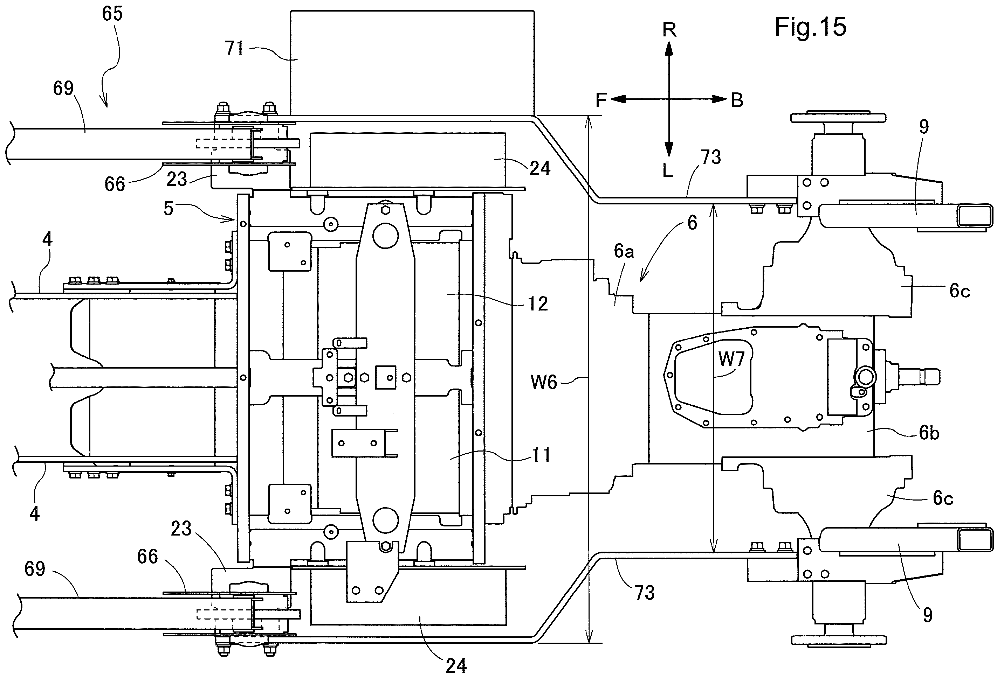

As shown in FIGS. 14 and 15, the electric tractor may be equipped with the front loader apparatus 65, which is a working apparatus.

The front loader apparatus 65 includes right and left base portions 66, right and left booms 67, a bucket 68, right and left boom cylinders 69, and right and left bucket cylinders 70.

The booms 67 are mounted to the upper end portions of the base portions 66 in such a manner as to be swingable upward and downward, and the boom cylinders 69 for swinging the booms 67 upward and downward are connected across the base portions 66 and the booms 67. The bucket 68 is mounted to the front end portions of the right and left booms 67 in such a manner as to be swingable upward and downward, and the bucket cylinders 70 for swinging the bucket 68 upward and downward are connected across the booms 67 and the bucket 68.

### Configuration of Backhoe Apparatus

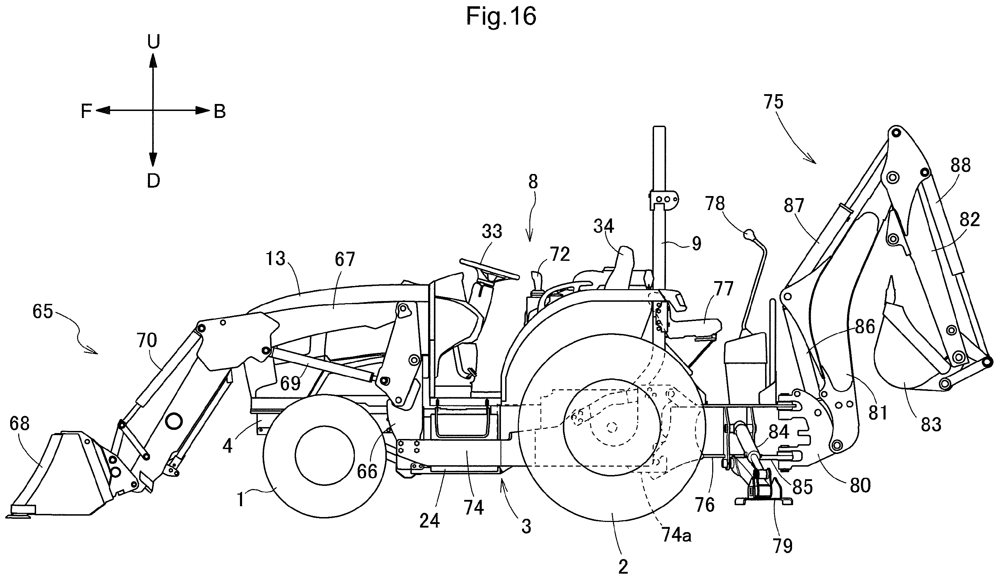

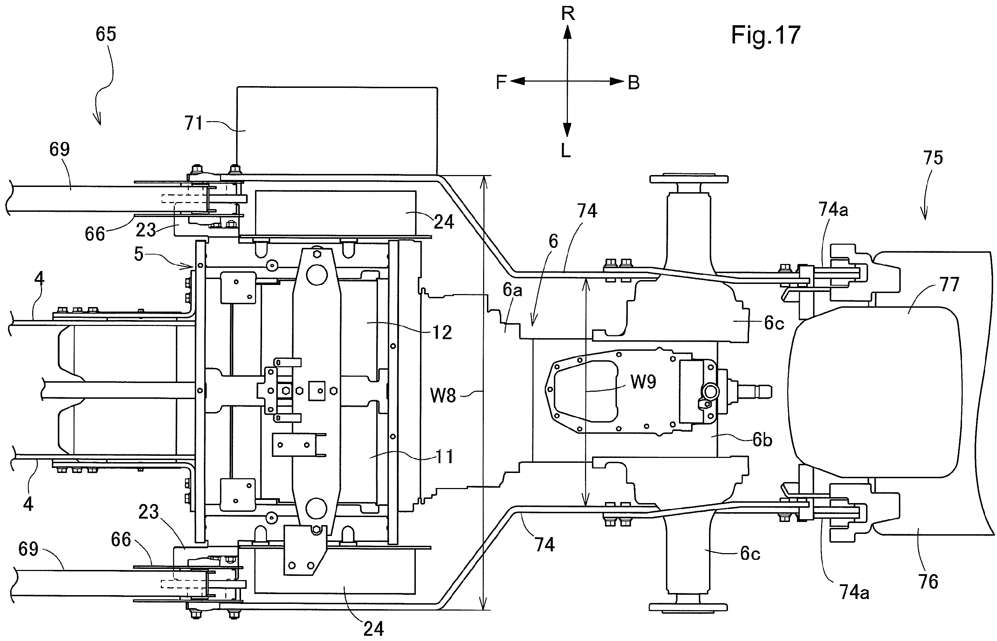

As shown in FIGS. 16 and 17, the electric tractor may be equipped with the front loader apparatus 65, which is a working apparatus, and a backhoe apparatus 75, which is a working apparatus. The front loader apparatus 65 is the same as that shown in FIGS. 14 and 15.

The backhoe apparatus 75 includes a base portion 76, an operator's seat 77, an operation lever 78, right and left outriggers 79, a swing bracket 80, a boom 81, an arm 82, a bucket 83, right and left outrigger cylinders 84, a swing cylinder 85, a boom cylinder 86, an arm cylinder 87, and a bucket cylinder 88.

The operator's seat 77 and the operation lever 78 are provided on the base portion 76 formed in a frame shape. The right and left outriggers 79 are mounted to the base portion 76 in such a manner as to be swingable upward and downward, and the outrigger cylinders 84 for swinging the outriggers 79 upward and downward are connected across the base portion 76 and the outriggers 79.

The swing bracket 80 is mounted to the base portion 76 in such a manner as to be swingable rightward and leftward, and the swing cylinder 85 for swinging the swing bracket 80 rightward and leftward is connected across the base portion 76 and the swing bracket 80.

The boom 81 is mounted to the swing bracket 80 in such a manner as to be swingable upward and downward, and the boom cylinder 86 for swinging the boom 81 upward and downward is connected across the swing bracket 80 and the boom 81.

The arm 82 is mounted to the boom 81 in such a manner as to be swingable forward and backward, and the arm cylinder 87 for swinging the arm 82 forward and backward is connected across the boom 81 and the arm 82.

The bucket 83 is mounted to the arm 82 in such a manner as to be swingable forward and backward, and the bucket cylinder 88 for swinging the bucket 83 forward and backward is connected across the arm 82 and the bucket 83.

### Configuration in which Front Loader Apparatus and Backhoe Apparatus are Mounted on Electric Tractor

As shown in FIGS. 14 to 17, when the front loader apparatus 65 is mounted, in the front loader apparatus 65, the lower portion of the right base portion 66 is connected to the lateral outer surface portion of the right mounting portion 23 of the housing frame 5, and the lower portion of the left base portion 66 is connected to the lateral outer surface portion of the left mounting portion 23 of the housing frame 5.

When only the front loader apparatus 65 is mounted, as shown in FIGS. 14 and 15, right and left front-rear frames 73 are used. When the front loader apparatus 65 and the backhoe apparatus 75 are mounted, as shown in FIGS. 16 and 17, right and left front-rear frames 74 are used.

As described above, in a state in which the base portions 66 of the front loader apparatus 65 are connected to the mounting portions 23 of the housing frame 5, as shown in FIGS. 14 to 17, the front end portions of the right front-rear frames 73 and 74 are connected to the lateral outer surface portion of the right base portion 66 of the front loader apparatus 65, and the rear end portions of the right front-rear frames 73 and 74 are connected to the right rear axle case 6c of the transmission case 6.

The front end portions of the left front-rear frames 73 and 74 are connected to the lateral outer surface portion of the left base portion 66 of the front loader apparatus 65, and the rear end portions of the left front-rear frames 73 and 74 are connected to the left rear axle case 6c of the transmission case 6. In this case, the right and left rear axle cases 6c of the transmission case 6 are the portions of the transmission case 6 to which the right and left traveling devices (the rear wheels 2) are mounted.

The base portions 66 of the front loader apparatus 65 are sandwiched between the mounting portions 23 and the front end portions of the front-rear frames 73 and 74, and the mounting portions 23, the front end portions of the front-rear frames 73 and 74, and the base portions 66 of the front loader apparatus 65 are fastened together and connected.

As shown in FIGS. 16 and 17, in the right and left front-rear frames 74, right and left rear mounting portions 74a are provided at the rear portions of the front-rear frames 74, respectively. When the backhoe apparatus 75 is mounted, the base portion 76 of the backhoe apparatus 75 is mounted to the rear mounting portions 74a of the front-rear frames 74.

### Configuration for Operation of Front Loader Apparatus and Backhoe Apparatus

As shown in FIGS. 14 to 17, a control valve unit 71, in which a plurality of solenoid-operated control valves are provided, is mounted to the front portions of the right front-rear frames 73 and 74. An operation lever 72 for operating the control valve unit 71 is provided at the right portion of the operation section 8. In this case, the control valve unit 71 serves as a control valve.

The hydraulic pump (not shown) is driven by the electric motor 12, the hydraulic oil of the hydraulic pump is supplied to the control valve unit 71, and from the control valve unit 71, the hydraulic oil is supplied to and discharged from the boom cylinders 69 and the bucket cylinders 70 of the front loader apparatus 65. The hydraulic oil of the hydraulic pump is also supplied to hydraulic equipment (not shown) such as the power steering device 43 (see FIG. 11) mounted on the electric tractor, and the hydraulic equipment such as the power steering device 43 is actuated by the supplied hydraulic oil.

An operator on the operator's seat 34 can operate the booms 67 and the bucket 68 of the front loader apparatus 65 by operating the operation lever 72 to operate the control valves of the control valve unit 71.

When the backhoe apparatus 75 is to be actuated, the operator performs a switching operation to supply the hydraulic oil of the aforementioned hydraulic pump to the backhoe apparatus 75.

The operator sits on the operator's seat 77 of the backhoe apparatus 75, and performs an operation to lower the right and left outriggers 79 into contact with the ground. The operator on the operator's seat 77 can operate the swing bracket 80, the boom 81, the arm 82, and the bucket 83 of the backhoe apparatus 75 by operating the operation lever 78 to operate a control valve (not shown) of the backhoe apparatus 75.

### Configuration of Front-Rear Frames

As shown in FIGS. 14 to 17, the front-rear frames 73 and 74 are formed in a crank shape in a plan view. The widths (intervals) W6 and W8 in the left-right direction between the front portions of the right and left front-rear frames 73 and 74 are larger than the widths (intervals) W7 and W9 in the left-right direction between the rear portions of the right and left front-rear frames 73 and 74. The widths (intervals) W7 and W9 between the rear portions of the right and left front-rear frames 73 and 74 in the left-right direction are substantially the same as the width W1 (see FIG. 4) of the housing frame 5 in the left-right direction.

The right front-rear frames 73 and 74 are provided laterally outward to the right of the right inverter 24 and laterally outward to the right of the transmission case 6, along the front-rear direction, and the control valve unit 71 is mounted to the front portions of the right front-rear frames 73 and 74. The left front-rear frames 73 and 74 are provided laterally outward to the left of the left inverter 24 and laterally outward to the left of the transmission case 6, along the front-rear direction. The right and left front-rear frames 73 and 74 are provided in such a manner as to overlap the inverters 24, the housing frame 5, and the transmission case 6 in height in a side view.

Since the widths (intervals) W7 and W9 between the rear portions of the right and left front-rear frames 73 and 74 in the left-right direction are smaller than the widths (intervals) W6 and W8 between the front portions of the right and left front-rear frames 73 and 74 in the left-right direction, the rear portions of the right and left front-rear frames 73 and 74 do not interfere with the rear wheels 2.

### First Alternative Embodiment of the Invention

Since the electric motor 12 may require a larger output than the electric motor 11 for generating power for traveling, the electric motor 12 may be configured to have a larger output than the electric motor 11.

### Second Alternative Embodiment of the Invention

The inverters 24 may be mounted to the frames 17 and 19 of the housing frame 5 and provided at an upper portion of the housing frame 5 (between the housing frame 5 and the floor 38).

With this configuration, at the right and left side portions 16 of the housing frame 5, the mounting portions 23 may be provided at intermediate portions in the front-rear direction of the side portions 16 or rear portions of the side portions 16.

### Third Alternative Embodiment of the Invention

The PTO shaft 28 and the mid-PTO shaft 29 may be omitted.

With this configuration, only working apparatuses actuated by hydraulic oil can be mounted on the electric tractor.

In a case where a working apparatus is mounted, hydraulic oil from the hydraulic pump driven by the electric motor 12 is supplied to hydraulic equipment such as the power steering device 43 mounted on the electric tractor and to the working apparatus. In a case where a working apparatus is not mounted, hydraulic oil from the hydraulic pump driven by the electric motor 12 is supplied to hydraulic equipment such as the power steering device 43 mounted on the electric tractor.

### Fourth Alternative Embodiment of the Invention

The electric motor 12 may be configured to transmit power to the PTO shaft 28 and the mid-PTO shaft 29 and not to drive the hydraulic pump.

With this configuration, the hydraulic pump may be configured to be driven by an electric motor (not shown) other than the electric motors 11 and 12.

The hydraulic pump may be configured to be driven by the electric motor 11. In this case, it is preferable that the control valve unit 71 be mounted to the left front-rear frames 73 and 74.

### Fifth Alternative Embodiment of the Invention

In a case where the electric motors 11 and 12 are provided side by side along the left-right direction, the electric motor 11 may be provided on the right and the electric motor 12 may be provided on the left.

The battery 10, the electric motors 11 and 12, and the housing frame 5 may be arranged in such a manner that the rear end portion of the battery 10 is positioned slightly rearward of the front end portions of the electric motors 11 and 12.

### Sixth Alternative Embodiment of the Invention

One electric motor 11 may be accommodated in the housing frame 5.

With this configuration, the width W1 of the housing frame 5 in the left-right direction and the width W3 of the front portion 6a of the transmission case 6 in the left-right direction may be substantially the same. In this case, the electric motor 12 may be mounted to a location other than the housing frame 5.

### Seventh Alternative Embodiment of the Invention

Two electric motors 11 may be accommodated in the housing frame 5 side by side along the left-right direction.

With this configuration, one electric motor 11 serves as a first electric motor 11, and the other electric motor 11 serves as a second electric motor 11. In this case, the electric motor 12 may be mounted to a location other than the housing frame 5.

### Eighth Alternative Embodiment of the Invention

One electric motor 12 may be accommodated in the housing frame 5.

With this configuration, the width W1 of the housing frame 5 in the left-right direction and the width W3 of the front portion 6a of the transmission case 6 in the left-right direction may be substantially the same. In this case, the electric motor 11 may be mounted to a location other than the housing frame 5.

### Ninth Alternative Embodiment of the Invention

Two electric motors 12 may be accommodated in the housing frame 5 side by side along the left-right direction.

With this configuration, one electric motor 12 serves as a first electric motor 12, and the other electric motor 12 serves as a second electric motor 12. In this case, the electric motor 11 may be mounted to a location other than the housing frame 5.

### Tenth Alternative Embodiment of the Invention

The front portions of the electric motors 11 and 12 may be connected to the front portion 14 of the housing frame 5.

With this configuration, the casings of the electric motors 11 and 12 serve as a portion of the housing frame 5, whereby the rigidity of the housing frame 5 is improved.

### Eleventh Alternative Embodiment of the Invention

In a case where the front loader apparatus 65 and the backhoe apparatus 75 are not mounted, the front-rear frames 73 and 74 may be connected across the mounting portions 23 of the housing frame 5 and the rear axle cases 6c of the transmission case 6.

In a state where the front loader apparatus 65 is not mounted, when the front-rear frames 74 are connected across the mounting portions 23 of the housing frame 5 and the rear axle cases 6c of the transmission case 6, the backhoe apparatus 75 may be mounted to the rear mounting portions 74a of the front-rear frames 74.

### Twelfth Alternative Embodiment of the Invention

The electric tractor may be of a rear two-wheel drive type instead of a four-wheel drive type.

With this configuration, the pipe member 30, the front wheel transmission shaft 31, the bearing portion 32, the opening 15b of the rear portion 15 and the recess 14a of the front portion 14 of the housing frame 5, and the like are omitted.

### Thirteenth Alternative Embodiment of the Invention

Instead of the rear wheels 2, crawler-type right and left traveling apparatuses (not illustrated) may be mounted to the transmission case 6.

Instead of an electric tractor provided with only the electric motors 11 and 12 as power sources, the electric tractor may be of a hybrid type provided with an engine (not illustrated) and the electric motors 11 and 12 as power sources.

### Correspondence with Claims - 1

With the above configuration, the electric tractor includes an operation section 8 having a floor 38 at a lower portion thereof. The electric tractor includes electric motors 11 and 12 provided below the floor 38 and configured to generate power for traveling, or power and hydraulic pressure for actuating a working apparatus (such as a front loader apparatus 65 and a backhoe apparatus 75) mounted on the electric tractor. The electric tractor includes a housing frame 5 provided below the floor 38 and accommodating the electric motors 11 and 12. Right and left mounting portions 23 for mounting base portions 66 of the working apparatus (the front loader apparatus 65) are provided at a right portion and a left portion of the housing frame 5.

Inverters 24 configured to actuate the electric motors 11 and 12 are mounted to the housing frame 5.

The inverters 24 are mounted to at least one of a right portion (the right side portion 16) and a left portion (the left side portion 16) of the housing frame 5, and are provided rearward of the mounting portions 23.

The electric tractor includes a first electric motor 11 and a second electric motor 12. The first electric motor 11 and the second electric motor 12 are arranged side by side along the left-right direction and accommodated in the housing frame 5.

### Correspondence with Claims - 2

With the above configuration, the electric tractor includes a transmission case 6 having right and left rear traveling devices (rear wheels 2) mounted thereto, and having a transmission mechanism provided therein to receive power transmitted from the electric motors 11 and 12. The transmission case 6 is connected to a rear portion 15 of the housing frame 5.

The width W1 of the housing frame 5 in the left-right direction is larger than the widths W3, W4, and W5 of the transmission case 6 in the left-right direction.

The electric tractor includes right front-rear frames 73 and 74 connected across the right mounting portion 23 and a portion (rear axle case 6c) of the transmission case 6 to which the right traveling device (rear wheel 2) is mounted, along the front-rear direction.

The electric tractor includes left front-rear frames 73 and 74 connected across the left mounting portion 23 and a portion (rear axle case 6c) of the transmission case 6 to which the left traveling device (rear wheel 2) is mounted, along the front-rear direction.

The right front-rear frames 73 and 74 are provided laterally outward to the right of the transmission case 6, and the left front-rear frames 73 and 74 are provided laterally outward to the left of the transmission case 6.

The width W1 of the housing frame 5 in the left-right direction is larger than the widths W3, W4, and W5 of the transmission case 6 in the left-right direction.

Widths W6 and W8 between front portions of the right and left front-rear frames 73 and 74 in the left-right direction are larger than widths W7 and W9 between rear portions of the right and left front-rear frames 73 and 74 in the left-right direction.

### Correspondence with Claims - 3

With the above configuration, the base portions 66 of the working apparatus (front loader apparatus 65) are sandwiched between the mounting portions 23 and the front-rear frames 73 and 74, whereby the mounting portions 23, the front-rear frames 73 and 74, and the base portions 66 of the working apparatus (front loader apparatus 65) are connected.

The right and left rear mounting portions 74a for mounting the base portion 76 of the working apparatus (backhoe apparatus 75) are provided at rear portions of the right and left front-rear frames 74.

Inverters 24 configured to actuate the electric motors 11 and 12 are mounted to at least one of a right portion (right side portion 16) and a left portion (left side portion 16) of the housing frame 5, and are provided rearward of the mounting portions 23. The front-rear frames 73 and 74 are provided laterally outward of the inverters 24.

A control valve (control valve unit 71) configured to supply and discharge hydraulic oil to and from the working apparatus (front loader apparatus 65) is mounted to the front-rear frames 73 and 74.

### Industrial Applicability

The present invention is applicable to an electric tractor.

### Description of Reference Signs

2 Rear Wheel (Rear Traveling Device)
5 Housing Frame
6 Transmission Case
6c Rear Axle Case of Transmission Case (Portion of Transmission Case to which Right Traveling Device is Mounted)
6c Rear Axle Case of Transmission Case (Portion of Transmission Case to which Left Traveling Device is Mounted)
8 Operation Section
11 Electric Motor (First Electric Motor)
12 Electric Motor (Second Electric Motor)
15 Rear Portion of Housing Frame
16 Side Portion (Right Portion) (Left Portion) of Housing Frame
23 Mounting Portion
24 Inverter
38 Floor
65 Front Loader Apparatus (Working Apparatus)
66 Base Portion of Working Apparatus
71 Control Valve Unit (Control Valve)
73 Front-Rear Frame
74 Front-Rear Frame
74a Rear Mounting Portion of Front-Rear Frame
75 Backhoe Apparatus (Working Apparatus)
W1 Width of Housing Frame in Left-Right Direction
W3 Width of Transmission Case in Left-Right Direction (Width of Front Portion of Transmission Case in Left-Right Direction)
W4 Width of Transmission Case in Left-Right Direction (Width of Front Portion of Transmission Case in Left-Right Direction)
W5 Width of Transmission Case in Left-Right Direction (Width of Rear Portion of Transmission Case in Left-Right Direction)
W6 Width between Front Portions of Right and Left Front-Rear Frames in Left-Right Direction
W7 Width between Rear Portions of Right and Left Front-Rear Frames in Left-Right Direction
W8 Width between Front Portions of Right and Left Front-Rear Frames in Left-Right Direction
W9 Width between Rear Portions of Right and Left Front-Rear Frames in Left-Right Direction

## Claims

1. An electric tractor comprising:
an operation section having a floor at a lower portion thereof;
at least one electric motor provided below the floor and configured to generate power for traveling, or power and hydraulic pressure for actuating a working apparatus mounted on the electric tractor; and
a housing frame provided below the floor and accommodating the electric motor,
wherein right and left mounting portions for mounting a base portion of the working apparatus are provided at a right portion and a left portion of the housing frame.

2. The electric tractor according to claim 1,
wherein an inverter configured to actuate the electric motor is mounted to the housing frame.

3. The electric tractor according to claim 2,
wherein the inverter is mounted to at least one of a right portion and a left portion of the housing frame, and is provided rearward of the mounting portions.

4. The electric tractor according to any one of claims 1 to 3,
wherein the at least one electric motor includes a first electric motor and a second electric motor, and
the first electric motor and the second electric motor are arranged side by side along the left-right direction and accommodated in the housing frame.

5. The electric tractor according to any one of claims 1 to 4, further comprising:
a transmission case having right and left rear traveling devices mounted thereto, and having a transmission mechanism provided therein to receive power transmitted from the electric motor,
wherein the transmission case is connected to a rear portion of the housing frame.

6. The electric tractor according to claim 5,
wherein a width of the housing frame in the left-right direction is larger than a width of the transmission case in the left-right direction.

7. The electric tractor according to claim 5 or 6, further comprising:
a right front-rear frame connected across the right mounting portion and a portion of the transmission case to which the right traveling device is mounted, along the front-rear direction; and
a left front-rear frame connected across the left mounting portion and a portion of the transmission case to which the left traveling device is mounted, along the front-rear direction.

8. The electric tractor according to claim 7,
wherein the right front-rear frame is provided laterally outward to the right of the transmission case, and
the left front-rear frame is provided laterally outward to the left of the transmission case.

9. The electric tractor according to claim 7 or 8,
wherein a width of the housing frame in the left-right direction is larger than a width of the transmission case in the left-right direction, and
a width between front portions of the right and left front-rear frames in the left-right direction is larger than a width between rear portions of the right and left front-rear frames in the left-right direction.

10. The electric tractor according to any one of claims 7 to 9,
wherein the base portion of the working apparatus is sandwiched between the mounting portions and the front-rear frames, and
the mounting portions, the front-rear frames, and the base portion of the working apparatus are connected.

11. The electric tractor according to any one of claims 7 to 10,
wherein right and left rear mounting portions for mounting the base portion of the working apparatus are provided at rear portions of the right and left front-rear frames.

12. The electric tractor according to any one of claims 7 to 11,
wherein an inverter configured to actuate the electric motor is mounted to at least one of a right portion and a left portion of the housing frame, and is provided rearward of the mounting portions, and
the front-rear frames are provided laterally outward of the inverter.

13. The electric tractor according to any one of claims 7 to 12,
wherein a control valve configured to supply and discharge hydraulic oil to and from the working apparatus is mounted to the front-rear frames.
